# EUROPEAN PATENT APPLICATION

(11) **EP 4 545 696 A1**
(43) Date of publication of application: **30.04.2025**
(21) Application number: 23846760.9
(22) Date of filing: 09.05.2023
(51) Int. Cl.: D06F 37/30, D06F 34/14, D06F 34/10, D06F 33/47, H02M 1/32, H02H 7/122, D06F 103/44, D06F 105/46

(54) **WASHING MACHINE THAT PREVENTS MOTOR CARBONIZATION, AND METHOD FOR CONTROLLING WASHING MACHINE**

(30) Priority: 27.07.2022 KR 20220093461; 25.11.2022 KR 20220160798
(71) Applicant: Samsung Electronics Co., Ltd., Suwon-si, Gyeonggi-do 16677 (KR)
(72) Inventor: LEE, Dahye, Suwon-si, Gyeonggi-do 16677 (KR); NOH, Kyoungwoong, Suwon-si, Gyeonggi-do 16677 (KR); OH, Changju, Suwon-si, Gyeonggi-do 16677 (KR); LEE, Seunghun, Suwon-si, Gyeonggi-do 16677 (KR)
(74) Representative: Gulde & Partner
(86) International application number: PCT/KR2023/006304
(87) International publication number: WO 2024/025099

(57) **Abstract**

The disclosure relates to a washing machine and a method of controlling the washing machine. When a current value output from an intelligent power module (IPM) is greater than or equal to a preset current value, the washing machine may cut off power supplied to the IPM by controlling an off-operation of a relay included in the washing machine, to prevent carbonization of a motor.

## Description

### Technical Field

An embodiment of the disclosure relates to a washing machine and a method of controlling the washing machine, which prevent motor carbonization (or motor burn-out) caused by the burn-out of an intelligent power module (IPM).

### Background Art

A washing machine may include a washing tub in which laundry is placed, a motor configured to rotate the washing tub, and an intelligent power module (IPM) configured to supply a driving voltage to the motor. The IPM may include an inverter circuit including a plurality of insulation gate bipolar transistors (IGBTs). Accordingly, the washing machine including the IPM is also referred to as an inverter washing machine.

When alternating current (AC) power is applied to the washing machine, the washing machine supplies a driving voltage to the motor through the IPM. The IPM supplies three-phase (U/V/W) power to the motor. When operations (e.g., a washing cycle, a rinsing cycle, and a spinning cycle, etc.) of the washing machine are performed, the motor supplies rotational power to the washing tub based on the three-phase power supplied from the IPM. The washing tub may include a pulsator. The pulsator circulates washing water contained in the washing tub to wash the laundry put into the washing tub.

In a standby state of the washing machine, a short current path may be formed between the IPM and the motor due to shorting of the IPM. The short current path may be referred to as an abnormal current path or a motor burnt path. When the short current path is formed between the IPM and the motor, overcurrent or abnormal current may be generated in the IPM. The shorting of the IPM may refer to burn-out of the IPM. The shorting of the IPM may refer to shorting of the IGBTs included in the IPM. The shorting of the IPM may be caused by various factors such as overheating, overcurrent, and overvoltage of the IPM. When the short current path is formed between the IPM and the motor due to the shorting of the IPM, the motor may be burnt.

### Disclosure of Invention

### Technical Solution

A washing machine according to an embodiment of the disclosure may include a motor, an intelligent power module (IPM), a sensor, a relay, a rectifier, and at least one processor. The motor may be configured to supply rotational power to a washing tub. The IPM may be configured to supply driving power of the motor. The sensor may be configured to detect a current value output from the IPM. The relay may be configured to output alternating current (AC) power applied to the washing machine. The rectifier may be configured to rectify the AC power output from the relay into direct current (DC) power and output the DC power to the IPM. The at least one processor may be configured to, when the washing machine is in a standby state, obtain a current value detected by the sensor, and when the obtained current value is greater than or equal to a preset current value, control an off-operation of the relay to cut off power supplied to the IPM.

A method of controlling a washing machine including a relay configured to output alternating current (AC) power, a rectifier configured to rectify the AC power output from the relay into direct current (DC) power, a washing tub, a motor configured to supply rotational power to the washing tub, an intelligent power module (IPM) configured to supply driving power of the motor based on the DC power output from the rectifier, and at least one processor according to an embodiment of the disclosure may include a step of, in a standby state of the washing machine, obtaining a current value output from the IPM, by the at least one processor. The method of controlling the washing machine according to an embodiment of the disclosure may include a step of, when the obtained current value is greater than or equal to a preset current value, controlling an off-operation of the relay to cut off power supplied to the IPM, by the at least one processor.

### Brief Description of Drawings

FIG. 1 is a block diagram illustrating a washing machine, according to an embodiment of the disclosure.
FIG. 2 is a diagram for describing an on-operation section or an off-operation section of a relay, according to an embodiment of the disclosure.
FIG. 3 is a block diagram illustrating a configuration of a washing machine, according to an embodiment of the disclosure.
FIG. 4 is a block diagram illustrating a configuration of a washing machine, according to an embodiment of the disclosure.
FIG. 5 is a block diagram illustrating a configuration of a washing machine, according to an embodiment of the disclosure.
FIG. 6 is a flowchart illustrating a method of controlling a washing machine, according to an embodiment of the disclosure.
FIG. 7 is a detailed flowchart illustrating an off-operation control process of a relay, according to an embodiment of the disclosure.
FIG. 8 is a flowchart illustrating a method of controlling a washing machine, according to an embodiment of the disclosure.
FIG. 9 is a diagram illustrating a relationship between a washing machine and an external device, according to an embodiment of the disclosure.

### Mode for the Invention

It should be understood that the various embodiments of the present disclosure and the terms used herein are not intended to limit the technical features described in the present disclosure to specific embodiments, and include various modifications, equivalents, or alternatives of corresponding embodiments.

In relation to the description of drawings, like reference numerals may denote like or related elements. In addition, portions irrelevant to the description of the disclosure will be omitted in the drawings for clear descriptions of the embodiments of the disclosure.

A singular form of a noun corresponding to an item may include one or more items, unless the relevant context clearly indicates otherwise.

Throughout the disclosure, the expression "at least one of a, b or c" indicates only a, only b, only c, both a and b, both a and c, both b and c, all of a, b, and c, or variations thereof. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases.

As used herein, the term "and/or" includes any and all combinations of one or more of the associated listed items. As used herein, such terms as "1st" and "2nd," or "first" and "second" may be used to simply distinguish a corresponding component from another, and does not limit the components in another aspect (e.g., importance or order).

It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element. Throughout the specification, when an element is "connected", "combined", "supported", or "contacted" with another element, the element may be directly connected, combined, supported, or contacted with the other element, or may be indirectly connected, combined, supported, or contacted with the other element through a third element.

When an element is referred to as being "on" another element, it may be directly on the other element, or intervening elements may be present therebetween.

The terms used herein are general terms currently widely used in the art in consideration of functions in an embodiment of the disclosure, but the terms may vary according to the intention of one of ordinary skill in the art, precedents, or new technology in the art. Also, some terms may be arbitrarily selected by the applicant, and in this case, the meaning of the selected terms will be described in detail in the detailed description of an embodiment of the disclosure. Accordingly, the specific terms used herein should be defined based on the unique meanings thereof and the whole context of the disclosure.

When a portion "includes" an element, another element may be further included, rather than excluding the existence of the other element, unless otherwise described. Further, as used in this specification, the terms "include," "have" and their conjugates may be construed to denote a feature, number, step, operation, constituent element, component, or a combination thereof, but may not be construed to exclude the existence or addition of one or more other features, numbers, steps, operations, constituent elements, components, or combinations thereof.

The terms such as "... unit" or "module" refer to units that perform at least one function or operation, and the units may be implemented as hardware or software or as a combination of hardware and software.

An embodiment of the disclosure will now be described more fully with reference to the accompanying drawings for one of ordinary skill in the art to be able to perform the embodiment of the disclosure without any difficulty. However, an embodiment of the disclosure may be implemented in many different forms and is not limited to the embodiment described herein.

According to an embodiment of the disclosure, there may be provided a washing machine and a method of controlling the washing machine, which prevent, in a standby state, a motor from being burnt by blocking a short current path formed between an intelligent power module (IPM) and the motor due to shorting of the IPM.

According to an embodiment of the disclosure, there may be provided a washing machine and a method of controlling the washing machine, which, in a standby state, when an operation of blocking a short current path formed between an IPM and a motor due to shorting of the IPM is repeated several times, output notification information indicating occurrence of an error in the IPM.

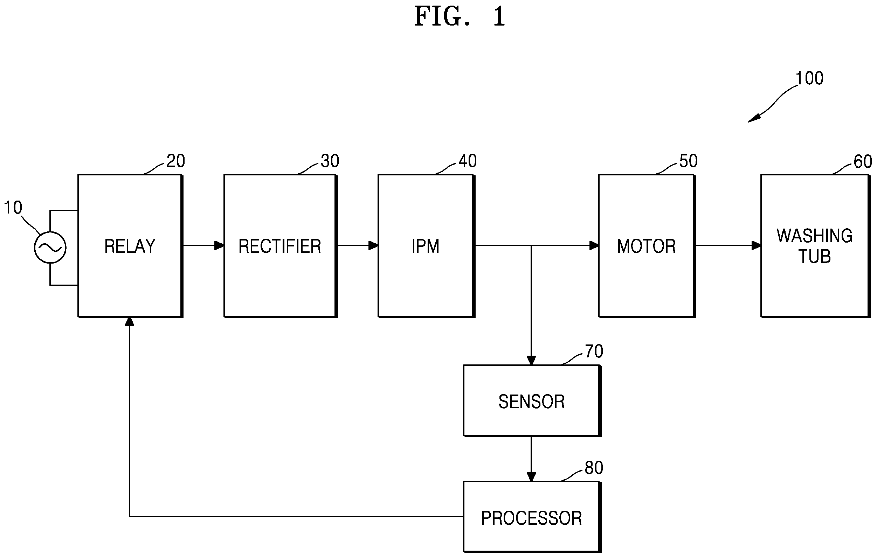

FIG. 1 is a block diagram illustrating a washing machine 100, according to an embodiment of the disclosure.

A standby state of the washing machine 100 according to an embodiment of the disclosure may include an operation state of the washing machine 100 from plug-in until an operation command (e.g., a washing cycle) of the washing machine 100 is applied to the washing machine 100 or an unexpected stop state during an operation of the washing machine 100. For example, the unexpected stop state during the operation of the washing machine 100 may occur when a user opens a door of the washing machine 100 or according a pause command.

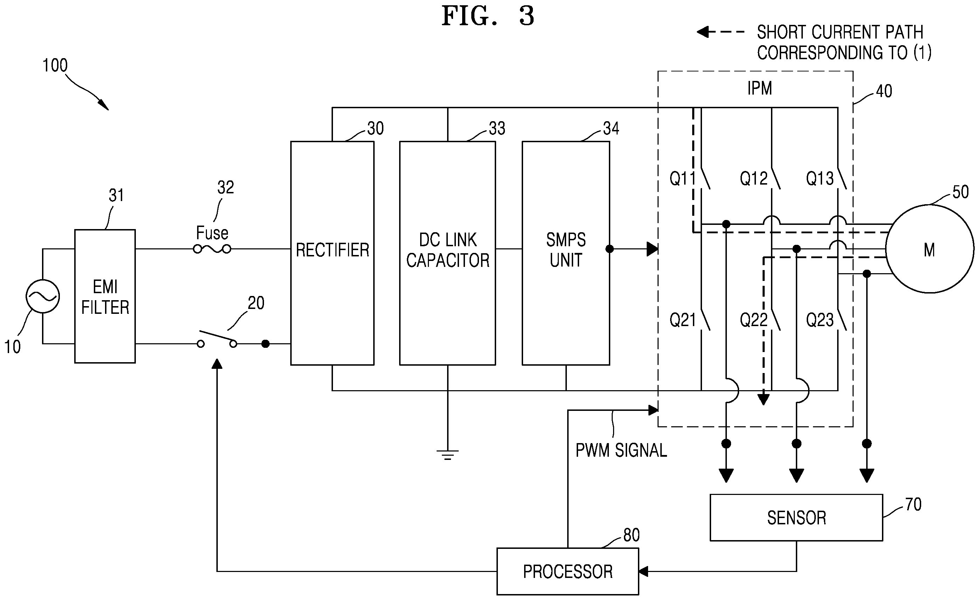

Referring to FIG. 1, the washing machine 100 includes a relay 20, a rectifier 30, an IPM 40, a motor 50, a washing tub 60, a sensor 70, and a processor 80. Elements of the washing machine 100 are not limited to those illustrated in FIG. 1. The washing machine 100 may include more or fewer elements than those illustrated in FIG. 1. For example, elements of the washing machine 100 may include elements illustrated in FIG. 3, 4, or 5 described below. For example, elements of the washing machine 100 may include a door (not shown) for opening the washing tub 60.

When alternating current (AC) power 10 is applied, the relay 20 according to an embodiment of the disclosure may be switched to output the applied AC power 10. The relay 20 may perform an on-operation or an off-operation according to a control signal transmitted from the processor 80. The control signal transmitted from the processor 80 may be referred to as a watchdog signal. The reason why the control signal is referred to as a watchdog signal is that an on-operation or off-operation of the relay 20 is controlled according to a situation determined by the processor 80. For example, when the watchdog signal that is the control signal transmitted from the processor 80 is in an on-state, the relay 20 may perform an on-operation. For example, when the watchdog signal that is the control signal transmitted from the processor 80 is in an off-state, the relay 20 may perform an off-operation.

The rectifier 30 according to an embodiment of the disclosure rectifies AC power output from the relay 20 into direct current (DC) power. The rectifier 30 may include four diodes. The rectifier 30 may be referred to as a bridge diode.

The IPM 40 according to an embodiment of the disclosure may supply three-phase power (U/V/W) to the motor 50 based on DC power output from the rectifier 30. A configuration and an operation of the IPM 40 will be described below in detail with reference to FIG. 3. The motor 50 according to an embodiment of the disclosure is driven by the three-phase power output from the IPM 40 to rotate the washing tub 60. As the motor 50 is driven by the three-phase power output from the IPM 40, the three-phase power output from the IPM 40 may be referred to as driving power of the motor 50.

The motor 50 according to an embodiment of the disclosure may include, but is not limited to, an induction motor, a brushless direct current (BLDC) motor, or a reluctance motor. For example, the motor 50 may include a surface-mounted permanent-magnet synchronous motor (SMPMSM), an interior permanent magnet synchronous motor (IPMSM), or a synchronous reluctance motor (SynRM). An operation of the motor 50 will be described below in detail with reference to FIG. 3.

The sensor 70 according to an embodiment of the disclosure may include a current sensor configured to detect a current value output form the IPM 40. The sensor 70 transmits the detected current value to the processor 80. The sensor 70 may be configured to detect current based on resistance. The sensor 70 may be configured to detect current based on a current transformer. The sensor 70 may be configured to detect current based on a hall integrated circuit (IC). A configuration of the sensor 70 will be described below in detail with reference to FIG. 3.

The processor 80 according to an embodiment of the disclosure may be referred to as a controller configured to control all functions of the washing machine 100. The processor 80 according to an embodiment of the disclosure may be referred to as a main processor of the washing machine 100. The processor 80 according to an embodiment may include a plurality of processors configured to control a plurality of functions of the washing machine. Accordingly, the processor 80 may be referred to as at least one processor.

When the washing machine 100 is in a standby state, the processor 80 according to an embodiment of the disclosure may obtain a current value output from the IPM 40 detected by the sensor 70. When the current value output from the IPM 40 is obtained, this may mean that the current value output from the IPM 40 is received. The processor 80 may compare the obtained current value with a preset current value. The preset current value is a value for determining whether a short current path is formed between the IPM 40 and the motor 50. Because carbonization (burnt) of the motor 50 occurs as the short current path is formed, the short current path may be referred to as a motor burnt path. Because the short current path is formed as abnormal current is output from the IPM 40, the short current path may be referred to as an abnormal current path. The carbonization of the motor according to an embodiment of the disclosure may include a phenomenon where an enamel coating of the motor 50 melts and insulation is destroyed or a phenomenon where a wiring of the motor 50 is overheated and ignited.

When the current value output from the IPM 40 is abnormal current, a short current path may be formed between the IPM 40 and the motor 50. The abnormal current may be referred to as overcurrent. The preset current value is a value for determining whether the current value output from the IPM 40 is abnormal current. For example, the preset current value may be, but is not limited to, 3.5 A. The preset current value may be determined according to specifications of the IPM 40 and the motor 50.

When the obtained current value is greater than or equal to the preset current value, the processor 80 according to an embodiment of the disclosure may determine that the current value output from the IPM 40 is an abnormal current value at which a short current path may be formed between the IPM 40 and the motor 50. For example, when the obtained current value is 3.5 A or more, the processor 80 may determine that the current value output from the IPM 40 is an abnormal current value.

When it is determined that the current value output from the IPM 40 is an abnormal current value based on the obtained current value, the processor 80 according to an embodiment of the disclosure outputs a control signal to the relay 20 so that the relay 20 performs an off-operation. Power supplied to the IPM 40 is cut off according to the off-operation of the relay 20 to block the short current path between the IPM 40 and the motor 50. Accordingly, the carbonization of the motor 50 may be prevented. A short current path between the IPM 40 and the motor 50 will be described below in detail with reference to FIG. 3.

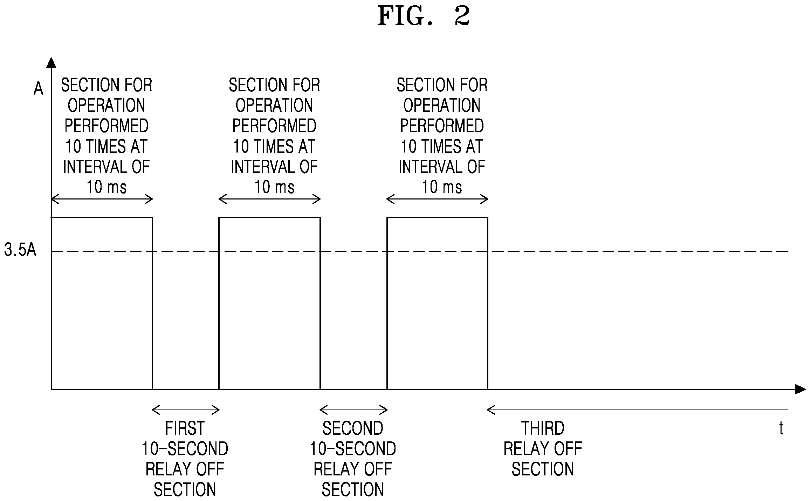

The processor 80 according to an embodiment of the disclosure may control an on-operation or an off-operation of the relay 20 as shown in FIG. 2. FIG. 2 is a diagram for describing an on-operation section or an off-operation section of a relay, according to an embodiment of the disclosure.

Referring to FIG. 2, the processor 80 may perform an operation of comparing a current value obtained from the sensor 70 with a preset current value at a first time interval (e.g., 10 ms) a first number of times (e.g., 10 times). For example, the first time interval may be set to 6 ms. For example, the first number of times may be set to 5 times. The first time interval and the first number of times are not limited to those described above. The first time interval and the first number of times may be set according to specifications of the IPM 40 and the motor 50.

According to an embodiment of the disclosure, as a result of performing a comparison operation at the first time interval for the first number of times, when it is determined that all obtained current values are greater than or equal to the preset current value, the processor 80 controls an off-operation of the relay 20. For example, as a result of performing a comparison operation at an interval of 10 ms 10 times, when it is determined that all obtained current values are greater than or equal to the preset current value, the processor 80 controls an off-operation of the relay 20 so that the relay 20 is turned off. Accordingly, power supplied to the IPM 40 may be cut off and a short current path between the IPM 40 and the motor 50 may be blocked, thereby preventing carbonization of the motor 50.

According to an embodiment of the disclosure, when off-operation control of the relay 20 is performed once, the processor 80 controls an off-operation of the relay 20 for a second time (e.g., 10 seconds) and then controls an on-operation of the relay 20. For example, when off-operation control of the relay 20 is performed once, the processor 80 may control the relay 20 to be turned off for 10 seconds and then may control the relay 20 to be turned on after 10 seconds. A time for which an off-operation of the relay 20 is performed is not limited to 10 seconds. For example, a time for which an off-operation of the relay 20 is performed may be set to 7 seconds. An off-operation time of the relay 20 may be determined by considering a time that allows shorting of the IPM 40 to be resolved by temporary power cut-off. A time for which the relay 20 performs an off-operation may be determined by according to specifications of the IPM 40 and the motor 50.

The processor 80 according to an embodiment of the disclosure may control the relay 20 to be in an on-state, and then may perform an operation of comparing a current value obtained from the sensor 70 with a preset current value at a first time interval (e.g., 10 ms) a first number of times (e.g., 10 times).

According to an embedment of the disclosure, as a result of performing a comparison operation at the first time interval for the first number of times, when it is determined that all obtained current values are greater than or equal to the preset current value, the processor 80 controls an off-operation of the relay 20.

According to an embodiment of the disclosure, when off-operation control of the relay 20 is performed twice, the processor 80 controls an off-operation of the relay 20 for a second time (e.g., 10 seconds), and then controls an on-operation of the relay 20. For example, when off-operation control of the relay 20 is performed twice, the processor 80 may control the relay 20 to be turned off for 10 seconds and then may control the relay 20 to be turned on. A time for which an off-operation of the relay 20 is performed is not limited to 10 seconds. For example, a time for which the relay 20 performs an off-operation may be set to 7 seconds. An off-operation time of the relay 20 may be determined by considering a time that allows shorting of the IPM 40 to be resolved by temporary power cut-off. A time for which the relay 20 performs an off-operation may be determined by specifications of the IPM 40 and the motor 50.

The processor 80 according to an embodiment of the disclosure may control the relay 20 to be in an on-state, and then may perform an operation of comparing a current value obtained from the sensor 70 with a preset current value at a first time interval (e.g., 10 ms) a first number of times (e.g., 10 times).

According to an embodiment of the disclosure, as a result of performing a comparison operation at the first time interval for the first number of times, when it is determined that all obtained current values are greater than or equal to the preset current value, the processor 80 controls an off-operation of the relay 20.

According to an embodiment of the disclosure, when off-operation control of the relay 20 is performed three times, the processor 80 maintains an off-operation of the relay 20. Although off-operation control of the relay 20 is performed three times by considering that shorting of the IPM 40 is resolved by temporary power cut-off, the number of times off-operation control of the relay 20 is performed is not limited to three times.

According to an embodiment of the disclosure, when shorting of the IPM 40 is resolved before off-operation control of the relay 20 is performed three times, the processor 80 may perform an operation of the washing machine 100. The operation of the washing machine 100 may include an operation of the washing machine 100 before a standby state. For example, the operation of the washing machine 100 may be a washing cycle. For example, the operation of the washing machine 100 may be a rinsing cycle. For example, the operation of the washing machine 100 may be a spinning cycle. Shorting of the IPM 40 may be resolved by temporarily cutting off power due to an off-operation of the relay 20, but the disclosure is not limited thereto. For example, shorting of the IPM 40 may be resolved by opening a fuse 32 illustrated in FIG. 3 while an off-operation or an on-operation of the relay 20 is controlled.

The washing tub 60 illustrated in FIG. 1 is a container, a bucket, or a drum for washing laundry therein, but the disclosure is not limited thereto.

FIG. 3 is a block diagram illustrating a configuration of the washing machine 100, according to an embodiment of the disclosure.

Referring to FIG. 3, the washing machine 100 includes an electromagnetic interference (EMI) filter 31, the fuse 32, the relay 20, the rectifier 30, a DC link capacitor 33, a switched-mode power supply (SMPS) unit 34, the IPM 40, the motor 50, the sensor 70, and the processor 80. However, elements of the washing machine 100 are not limited to those illustrated in FIG. 3. For example, the washing machine 100 may include more elements than those illustrated in FIG. 3. For example, the washing machine 100 may include fewer elements than those illustrated in FIG. 3.

When the AC power 10 is applied through a power line, the EMI filter 31 according to an embodiment of the disclosure removes an electrical noise component included in the applied AC power 10. To remove the electrical noise component, the EMI filter 31 may be configured to absorb the electrical noise component applied through the power line based on a coil, but the disclosure is not limited thereto. For example, the EMI filter 31 may be configured to block or bypass the electrical noise component applied through the power line to the ground.

When a magnitude of input current or an input voltage output from the EMI filter 31 is greater than or equal to a limit value, the fuse 32 according to an embodiment of the disclosure is opened to protect a circuit at the rear end. For example, when the input current is greater than or equal to 12 A, the fuse 32 may be opened. For example, when the input voltage is greater than or equal to 250 V, the fuse 32 may be opened. When abnormal current is output from the IPM 40 due to shorting of the IPM 40, the fuse 32 may be automatically opened, but the fuse 32 may not be opened due to a malfunction of the fuse 32. Control of the relay 20 according to an embodiment of the disclosure may be performed when the fuse 32 malfunctions. When the fuse 32 is opened, power supplied to the IPM 40 is cut off, and thus, a short current path is not formed between the IPM 40 and the motor 50.

The relay 20 according to an embodiment of the disclosure may be connected in series to an output line of the EMI filter 31. Although the relay 20 and the fuse 32 have a parallel-connection structure in FIG. 3, the disclosure is not limited thereto. The relay 20 and the fuse 32 may be a series-connection structure. When power is applied to the washing machine 100, the relay 20 may perform an on-state due to a control signal transmitted from the processor 80. In the on-state, the relay 20 outputs power output from the EMI filter 31 to the rectifier 30.

The rectifier 30 according to an embodiment of the disclosure rectifies AC power output from the fuse 32 and AC power output from the relay 20 into DC power. The rectifier 30 transmits the rectified DC power to the DC link capacitor 33.

The DC link capacitor 33 according to an embodiment of the disclosure charges the DC power output from the rectifier 30. The DC link capacitor 33 supplies a DC link voltage to the SMPS unit 34 while discharging the charged DC power. The DC link capacitor 33 allows a stable DC link voltage to be supplied to the SMPS unit 34. For example, even when unstable DC power is temporarily applied, the DC link capacitor 33 may supply a stable voltage to the SMPS unit 34 based on the charged voltage.

The SMPS unit 34 according to an embodiment of the disclosure converts the input DC link voltage into another DC link voltage. The SMPS unit 34 outputs the other DC link voltage to the IPM 40. The other DC link voltage has a DC voltage value required to operate the IPM 40. For example, the SMPS unit 34 may generate a DC voltage value less than the input DC link voltage value and may supply the generated DC voltage value to the IPM 40. The DC voltage value less than the input DC link voltage value is another DC link voltage. For example, the SMPS unit 34 may generate a DC voltage value greater than or equal to the input DC link voltage value and may supply the generated DC voltage value to the IPM 40. The DC voltage value greater than or equal to the input DC link voltage value is another DC link voltage. The other DC voltage generated by the SMPS unit 34 may be determined according to a specification of the IPM 40. The SMPS unit 34 may include, but is not limited to, a switching circuit.

The IPM 40 according to an embodiment of the disclosure supplies three-phase power (U/V/W) power to the motor 50 based on the other DC voltage output from the SMPS unit 34. The IPM 40 may include, but is not limited to, three-phase switch elements (e.g., Q11, Q12, Q13, Q21, Q22, and Q23) as shown in FIG. 3. The three-phase switch elements (e.g., Q11, Q12, Q13, Q21, Q22, and Q23) may include insulation gate bipolar transistors (IGBTs). The three-phase switch elements (e.g., Q11, Q12, Q13, Q21, Q22, and Q23) perform a switch on-operation or a switch off-operation according to a pulse width modulation (PWM) signal provided from the processor 80 to convert an input DC voltage into three-phase AC voltages (e.g., Vua, Vvb, and Vwc) having a certain frequency or duty ratio. The three-phase switch elements (e.g., Q11, Q12, Q13, Q21, Q22, and Q23) output the converted three-phase AC voltages (e.g., Vua, Vvb, and Vwc) to the motor 50.

The three-phase switch elements (e.g., Q11, Q12, Q13, Q21, Q22, and Q23) included in the IPM 40 according to an embedment of the disclosure are configured to connect, in parallel, a first switch pair (Q11, Q21), a second switch pair (Q12, Q22), and a third switch pair (Q13, Q23) connected in series to each other. The first switch pair (Q11, Q21), the second switch pair (Q12, Q22), and the third switch pair (Q13, Q23) may each be referred to as a high arm switch and a low arm switch. The first switch pair (Q11, Q21) supplies a first phase AC voltage Vua from among the three-phase AC voltages (e.g., Vua, Vvb, and Vwc) to a first phase coil La from among three-phase coils (e.g., La, Lb, and Lc) of the motor 50. The second switch pair (Q12, Q22) supplies a second phase AC voltage Vvb from among the three-phase AC voltages (e.g., Vua, Vvb, and Vwc) to a second phase coil Lb from among the three-phase coils (e.g., La, Lb, and Lc) of the motor 50. The third switch pair (Q12, Q22) supplies a third phase AC voltage Vwc from among the three-phase AC voltages (e.g., Vua, Vvb, and Vwc) to a third phase coil Lc from among the three-phase coils (e.g., La, Lb, and Lc) of the motor 50. The switches Q11, Q12, and Q13 and the switches Q21, Q22, and Q23 are turned on or off according to a PWM signal input from the processor 80 to respectively supply the three-phase AC voltages (e.g., Vua, Vvb, and Vwc) to the three-phase coils (e.g., La, Lb, and Lc) of the motor 50 to control an operation of the motor 50.

Shorting of the IPM 40 according to an embodiment of the disclosure refers to shorting of at least some of the three-phase switches Q11, Q12, Q13, Q21, Q22, and Q23 included in the IPM 40. A short current path formed between the IPM 40 and the motor 50 due to shorting of the IPM 40 may occur in nine cases, excluding a case where an arm short occurs. The arm short may include a case where the switches Q11 and Q21 are simultaneously shorted, a case wherein the switches Q12 and Q22 are simultaneously shorted, and a case where the switches Q13 and Q23 are simultaneously shorted.

A short current path formed between the IPM 40 and the motor 50 according to an embodiment of the disclosure is as follows.
(1) Q11 short + Q22 short:
   Short current path (Q11 of IPM 40 -> motor 50 -> Q22 of IPM 40)
(2) Q11 short + Q23 short:
   Short current path (Q11 of IPM 40 -> motor 50 -> Q23 of IPM 40)
(3) Q11 short + Q22 short + Q23 short:
   Short current path (Q11 of IPM 40 -> motor 50 -> Q22 of IPM 40 and Q11 of IPM 40 -> motor 50 -> Q23 of IPM 40)
(4) Q12 short + Q21 short:
   Short current path (Q12 of IPM 40 -> motor 50 -> Q21 of IPM 40)
(5) Q12 short + Q23 short:
   Short current path (Q12 of IPM 40 -> motor 50 -> Q23 of IPM 40)
(6) Q12 short + Q21 short + Q23 short:
   Short current path (Q12 of IPM 40-> motor 50 -> Q21 of IPM 40 and Q12 of IPM 40 -> motor 50 -> Q23 of IPM 40)
(7) Q13 short + Q21 short:
   Short current path (Q13 of IPM 40-> motor 50 -> Q21 of IPM 40)
(8) Q13 short + Q22 short:
   Short current path (Q13 of IPM 40 -> motor 50 -> Q22 of IPM 40)
(9) Q13 short + Q21 short + Q22 short:
   Short current path (Q13 of IPM 40 -> motor 50 -> Q21 of IPM 40 and Q13 of IPM 40 -> motor 50 -> Q22 of IPM 40)

The motor 50 according to an embodiment of the disclosure may include a stator in which the three-phase coils (e.g., La, Lb, and Lc) are wound and a rotor located in the stator and rotated by a magnetic field generated in the three-phase coils (e.g., La, Lb, and Lc). When three-phase AC voltages are supplied from the IPM 40 to the three-phase coils (e.g., La, Lb, and Lc) of the motor 50, a permanent magnet included in the rotor may be rotated by a magnetic field generated in the three-phase coils (e.g., La, Lb, and Lc).

The sensor 70 according to an embodiment of the disclosure may be referred to as a driving current detection unit of the IPM 40. The sensor 70 detects a current value output from the IPM 40. The sensor 70 may include a current sensor as described with reference to FIG. 1. The sensor 70 may detect current flowing through each of three output lines of the IPM 40. The sensor 70 may include, but is not limited to, at least one resistor connected in series between the three output lines of the IPM 40 and the ground.

The processor 80 according to an embodiment of the disclosure obtains a current value output from the IPM detected by the sensor 70. The processor 80 obtains a current value output from each of the three output lines of the IPM 40 detected by the sensor 70. The processor 80 may obtain three current values detected by the sensor 70.

The processor 80 according to an embodiment of the disclosure compares each of the obtained three current values with a preset current value. For example, the preset current value may be, but is not limited to, 3.5 A as described with reference to FIG. 1. The processor 80 recognizes that an operation state of the IPM 40 is a normal state when all of the obtained three current values are less than 3.5 A. Accordingly, the processor 80 may generate a PWM signal to drive the motor50 for each of courses (washing cycle, rinsing cycle, and spinning cycle) included in washing course information input by a user. For example, the processor 80 may generate PWM so that a driving speed of the motor 50 for each course (washing cycle, rinsing cycle, or spinning cycle) matches a current speed of the motor 50. The generated PWM is transmitted to the IPM 40.

The processor 80 according to an embodiment of the disclosure determines that abnormal current flows through the IPM 40 when at least one of the three current values obtained from the sensor 70 is greater than or equal to the preset current value. When it is determined that abnormal current flows through the IPM 40, the processor 80 determines that the fuse 32 is not opened. This is because power may not be applied to the IPM 40 when the fuse 32 is opened.

Although the motor 50 is likely to be carbonized due to shorting of the IPM 40, because the fuse 32 is not opened, the processor 80 according to an embodiment of the disclosure may control an operation of the relay 20 to prevent carbonization of the motor 50. For example, the processor 80 compares the three current values obtained through the sensor 70 with the preset current value at a first time interval (e.g., 10 ms).

As a comparison result according to an embodiment of the disclosure, when it is determined that at least one of the three current values is greater than or equal to the preset current value, the processor 80 determines whether a determined number of times has reached a preset first number of times (e.g., 10 times). When the determined number of times does not reach the preset first number of times, the processor 80 compares the obtained three current values with the preset current value until the preset first number of times is reached.

According to an embodiment of the disclosure, as a result of performing comparison the preset first number of times (e.g., 10 times), when it is determined that at least one of the three current values is greater than or equal to the preset current value in all of the first number of times, the processor 80 controls an off-operation of the relay 20 for a second time (e.g., 10 seconds). As the relay 20 performs the off-operation, a voltage applied to the IPM 40 may be cut off, and thus, a short state of the IPM 470 may be resolved.

According to an embodiment of the disclosure, to more accurately prevent carbonization of the motor 50 due to shorting of the IPM 40, after the second time (e.g., 10 seconds) elapses, the processor 80 may control an on-operation of the relay 20. After the on-operation of the relay 20 is performed, the processor 80 compares three current values obtained through the sensor 70 with a preset current value. The processor 80 may perform a comparison operation at the first time interval for the first number of times.

According to an embodiment of the disclosure, as a result of performing comparison at the first time interval for the first number of times, when all of the three current values obtained through the sensor 70 are not greater than or equal to the preset current value, the processor 80 may determine that an operation of the IPM 40 is normal. When the operation of the IPM 40 is normal, the processor 80 may transmit a PWM signal to the IPM 40 to perform an operation of the washing machine 100.

According to an embodiment of the disclosure, as a result of performing comparison at the first time interval for the first number of times, when at least one of three current values transmitted from the sensor 70 is greater than or equal to a preset current value, the processor 80 may determine that the IPM 40 does not normally operate (short state of the IPM 40). Accordingly, the processor 80 may control an off-operation of the relay 20. When the off-operation of the relay 20 is performed, power supplied to the IPM 40 may be cut off to prevent carbonization of the motor 50.

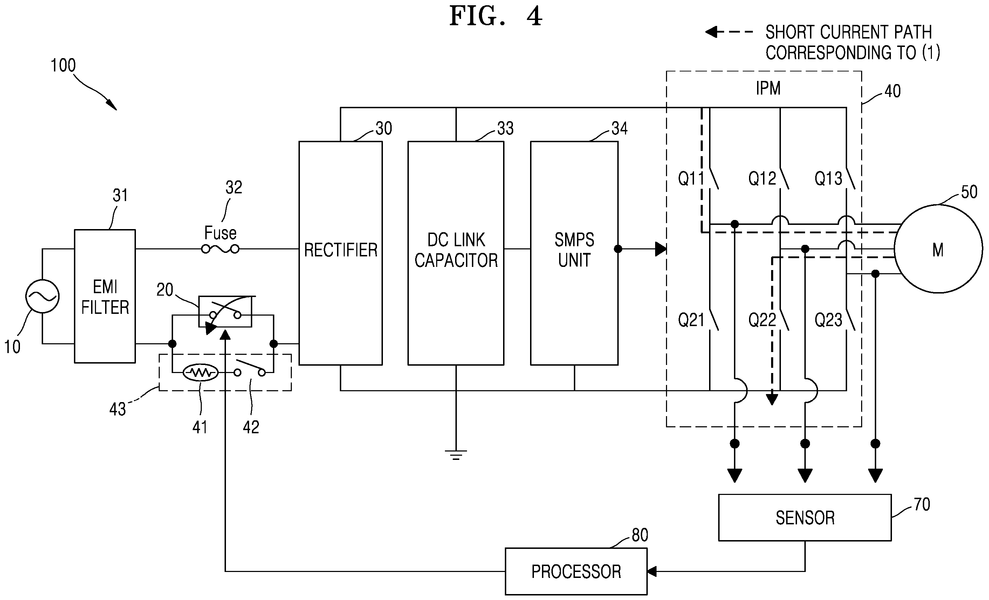

FIG. 4 is a diagram illustrating a configuration of the washing machine 100, according to an embodiment of the disclosure.

The configuration of FIG. 4 further includes an inrush current blocking unit 43 connected in parallel to the relay 20, in addition to the configuration of the washing machine 100 of FIG. 3. The inrush current blocking unit 43 may be referred to as an inrush current prevention unit. When an AC voltage applied from the AC power 10 rapidly changes, inrush current may be generated in the input AC current. For example, when an input AC voltage applied from the AC power 10 suddenly changes to a high voltage during an operation of the washing machine 100, inrush current may be generated. When inrush current is applied, the inrush current blocking unit 43 according to an embodiment of the disclosure blocks the inrush current so as not to transmit the inrush current to a component at the rear end. For example, the inrush current blocking unit 43 may be configured to connect a positive temperature coefficient (PTC) or PTC + relay, or a negative temperature coefficient thermistor (NTC) to the relay 20 in parallel, but the disclosure is not limited thereto. For example, the inrush current blocking unit 43 may include, but is not limited to, a coil 41 and a switch 42 as shown in FIG. 4. The coil 41 and the switch 42 are connected in series between the EMI filter 31 and the rectifier 30 and are connected in parallel to the relay 20. The switch 42 illustrated in FIG. 4 performs an on-operation at an in initial stage of an operation of the washing machine 100. The processor 80 may control an on-operation of the switch 42. As the on-operation of the switch 42 is performed, the coil 41 operates to stabilize a change in current output from the EMI filter 31. For example, the coil 41 may block noise (e.g., a noise component and AC with irregular frequency components, etc.) included in current output from the EMI filter 31. The coil 41 outputs current from which noise (or inrush current) is blocked to the rectifier 30 through the switch 42. For example, the initial stage of the operation of the washing machine 100 may be, but is not limited to, a section from a time when the AC power 10 is applied to the washing machine 100 to a time before an operation (e.g., a washing cycle, a rinsing cycle, or a spinning cycle, etc.) of the washing machine 100 is performed. When the operation of the washing machine 100 is performed, the switch 42 performs an off-operation. The processor 80 may control the off-operation of the switch 42. The washing machine 100 may provide more stable AC current to elements during an operation according to an operation of the inrush current blocking unit 43.

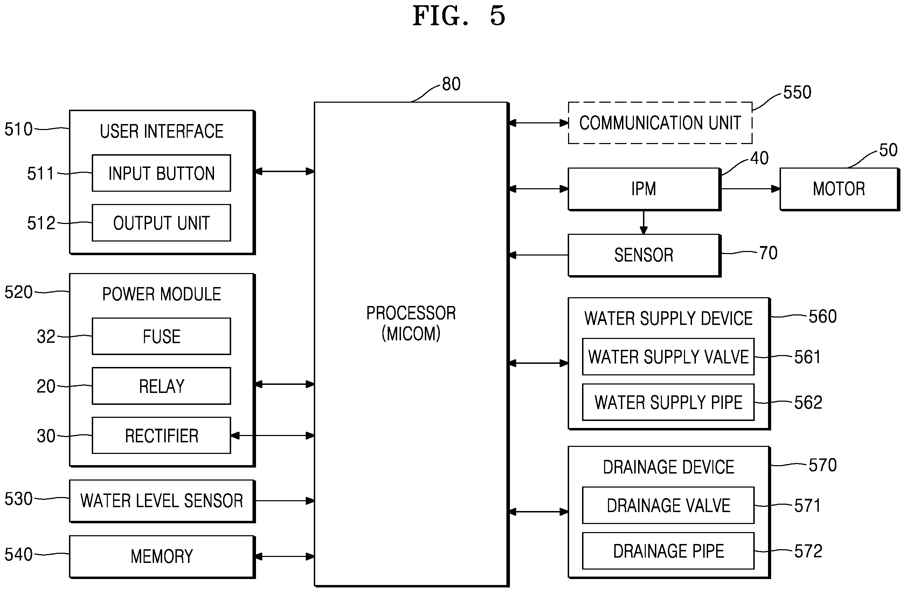

FIG. 5 is a diagram illustrating a configuration of the washing machine 100, according to an embodiment of the disclosure.

Referring to FIG. 5, the washing machine 100 may include, but is not limited to, a user interface 510, a power module 520, a water level sensor 530, a memory 540, the IPM 40, the motor 50, the sensor 70, a water supply device 560, a water drainage device 570, and the processor 80. For example, the washing machine 100 may include a communication unit 550 marked by a dashed line in FIG. 5. For example, the washing machine 100 may include more elements according to a type of the washing machine 100, for example, the washing tub 60 (not shown in FIG. 5), an inlet for putting laundry into the washing tub 60 or taking laundry out of the washing tub 60, and a door covering the inlet, etc..

The user interface 510 according to an embodiment of the disclosure may be referred to as a control panel of the washing machine 100. The user interface 510 may include an input button 511 and an output unit 512.

The input button 511 according to an embodiment of the disclosure may be configured to input a user input. The output unit 512 may output washing settings, washing operation information, or notification information in response to a user input. The input button 511 and the output unit 512 may partially overlap each other. The input button 511 may include, for example, but not limited to, a power button, an operation button, a course selection button, and a washing/rinsing/spinning setting button. The input button 511 may provide an electrical output signal corresponding to a user input to the processor 80.

The output unit 512 according to an embodiment of the disclosure may include a first screen on which a washing course and an operation time of the washing machine selected by the course selection button are displayed, an indicator configured to indicate washing/rinsing/spinning setting selected by the setting button, and a second screen on which operation error summary information indicating that power has been cut off due to shorting of the IPM 40 is displayed. The first screen and the second screen may be one screen or may be independent screens. The first screen and the second screen may be referred to as a display. The output unit 512 may include a speaker configured to output a voice signal or an audio signal. The output unit 512 may include at least one of the display and the speaker. The output unit 512 may be configured to output information (e.g., notification information) through at least one of the display and the speaker.

The power module 520 according to an embodiment of the disclosure may include, but is not limited to, the fuse32, the relay 20, and the rectifier 30 shown in FIGS. 3 and 4. The power module 520 may convert AC power applied from the AC power 10 into DC power and may transmit the DC power to each element of the washing machine 100.

When a magnitude of an input voltage or a magnitude of input current applied from the AC power 10 is greater than or equal to a limit value, the fuse 32 according to an embodiment of the disclosure is opened. When the fuse 32 is opened, a circuit at the rear end of the fuse 32 may be protected from an applied abnormal voltage or abnormal current. In a short state of the IPM 40, the fuse 32 may be automatically opened to cut off power supplied to the circuit after the use 32, but may not be opened due to a malfunction. The relay 20 may be configured as described with reference to FIG. 1 or 3 so that an on-operation or an off-operation is controlled by the processor 80.

The water level sensor 530 according to an embodiment of the disclosure senses a water level of the washing tub 60. For example, the water level sensor 530 determines a water level of the washing tub 60 according to a water level set by a user in a washing cycle input through the input button 511. The water level sensor 530 may be referred to as a water sensor.

The motor 50 according to an embodiment of the disclosure supplies rotational power to the washing tub 60 of the washing machine 100 as described with reference to FIG. 1 or 2. The motor 50 may include, but is not limited to, a three-phase synchronous motor as described with reference to FIG. 1 or 3.

The IPM 40 supplies driving power (or driving current or driving power) for rotating a rotation shaft of the motor 50 to the motor 50 based on a driving signal (PWM signal) received from the processor 80. The IPM 40 may be referred to as a motor driver. The IPM 40 may include a PWM controller configured to provide PWM for controlling operations of the switches Q11, Q12, Q13, Q21, Q22, and Q23 shown in FIG. 3. When the PWM controller is included in the IPM 40, the processor 80 may control an operation of the PWM controller without including a function of generating PWM. The IPM 40 may convert input DC power into three-phase AC power by using a pulse width modulation method. The IPM 40 may supply the three-phase AC power as driving power of the motor 50 to the motor 50.

The sensor 70 according to an embodiment of the disclosure may be the current sensor described with reference to FIG. 1 or 3. The sensor 70 may be referred to as a driving current detection unit of the IPM 40. The sensor 70 may detect three current values output from the IPM 40. The sensor 70 may provide the detected three current values to the processor 80. Accordingly, the processor 80 compares a preset current value with the three current values obtained through the sensor 70 as described with reference to FIG. 1 or 3. The processor 80 may determine whether abnormal current has occurred in the IPM 40 based on a comparison result.

The processor 80 according to an embodiment of the disclosure may determine whether abnormal current has been generated in the IPM 40 based on the comparison result and may determine whether the IPM 40 normally operates while controlling an off-operation or an on-operation of the relay 20 a preset second number of times (e.g., 3 times). When it is determined that an operation of the IPM 40 is not normal while controlling the off-operation or the on-operation of the relay 20, the processor 80 controls the off-operation of the relay 20 to cut off power supplied to the IPM 40. Accordingly, carbonization of the motor 50 due to shorting of the IPM 40 may be prevented.

The water supply device 560 according to an embodiment of the disclosure includes a water supply pipe 562 connected to an external water supply source to supply water to the washing tub 60 and a water supply valve 561. The water supply valve 561 may allow or block water supply from the external water supply source to the washing tub 60 through the water supply pipe 562 in response to an electrical signal. For example, the water supply valve 561 may include a solenoid valve that is opened or closed in response to an electrical signal.

The water drainage device 570 according to an embodiment may discharge water contained in the washing tub 60 to the outside. The water drainage device 570 may include a water drainage pipe 572 connected to the outside and a water drainage valve 571. The water drainage valve 571 may discharge water to the outside through the water drainage pipe 572 in response to an electrical signal.

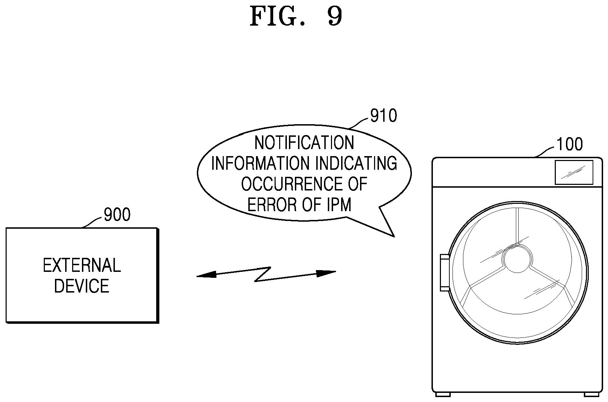

The communication unit 550 according to an embodiment of the disclosure is configured to communicate with an external device 900 of FIG. 9 described below. The communication unit 550 may receive a remote control signal from the external device 900 or may transmit notification information indicating an operation state of the washing machine 100, notification information indicating that power supplied to the IPM 40 has been cut off due to shorting (or power disconnection) of the IPM 740, or notification information indicating occurrence of an error in the IPM 40 to the external device 900.

The communication unit 550 according to an embodiment of the disclosure may include a short-range communication module.

The short-range communication module may be a method for short-range communication within a certain distance. Examples of short-range communication technology may include, but are not limited to, wireless LAN, Wi-Fi, Bluetooth, Zigbee, Wi-Fi direct (WFD), ultra-wideband (UWB), infrared data association (IrDA), Bluetooth low energy (BLE), and near-field communication (NFC), etc..

The communication unit 550 according to an embodiment of the disclosure may include a wired communication module.

The wired communication module refers to a module for communication using an electrical signal or an optical signal. Examples of wired communication technology may include, but are not limited to, a pair cable, a coaxial cable, an optical fiber cable, and an Ethernet cable, etc..

The communication unit 550 according to an embodiment of the disclosure may include a mobile communication module.

The mobile communication module may transmit and receive a wireless signal to and from at least one of a base station, an external terminal, and a server device on a mobile communication network. The wireless signal may include various types of data according to transmission and reception of a voice call signal, a video call signal, or a text/multimedia message.

The communication unit 550 according to an embodiment of the disclosure may include at least one of a short-range communication module, a wired communication module, and a mobile communication module.

The external device 900 of FIG. 9 described below may be, but is not limited to, a portable terminal such as a smartphone, a server that may be connected based on the Internet, or a home server. When the external device 900 is a portable terminal, the washing machine 100 transmits a notification to the portable terminal through the communication unit 550. Accordingly, a state of the washing machine 100 may be informed or information related to laundry may be provided to a user having the portable terminal. When the external device 900 is a portable terminal, the washing machine 100 may control an operation of the washing machine 100 based on a remote control signal (or a remote command) received through the communication unit 550.

Although the above embodiments have been described based on the washing machine, carbonization of the motor 50 may be prevented by applying the above embodiments to an electronic device including the IPM 40, the motor 50, the relay 20, and the sensor 70 configured to detect current output from the IPM 40.

The processor 80 according to an embodiment of the disclosure controls operations of the elements illustrated in FIG. 5, and according to an embodiment, when power of the washing machine 100 is turned on, the processor 80 turns on the relay 20 so that the AC power 10 is supplied to the IPM 40. When abnormal current is output from the IPM 40 as at least one of nine short current paths is formed between the IPM 40 and the motor 50 due to damage including shorting of the IPM 40, the processor 80 performs an operation of temporarily turning off the relay 20 and then turning on the relay 20 a preset second number of times (e.g., 3 times).

When it is determined that current output from the IPM 40 is abnormal current even when off-operation control of the relay 20 is performed the second number of times, the processor 80 may turn off the relay 20 to cut off power supplied to the IPM 40, thereby preventing carbonization of the motor 50. The processor 80 may be referred to as at least one processor. The processor 80 may perform an operation according to an embodiment of the disclosure by executing at least one instruction stored in the memory 540.

The processor 80 is a controller configured to control all functions of the washing machine 100. The processor 80 may be referred to as a controller, a micom, or a micro-controller. The processor 80 may include one or more processors. In this case, the one or more processors may include a general-purpose processor such as a central processing unit (CPU), an application processor (AP), or a digital signal processor (DSP), a dedicated graphics processor such as a graphics processing unit (GPU) or a vision processing unit (VPU), or an artificial intelligence (AI) processor such as a neural processing unit (NPU). For example, when the one or more processors are Al-dedicated processors, the Al-dedicated processor may be designed as a hardware structure specialized in processing a particular Al model.

The memory 540 may store at least one instruction executed by the processor 80. The processor 80 may write data to the memory 540 or may read data stored in the memory 540. The processor 80 may process data according to pre-defined operation rules or an Al model by executing a program or at least one instruction stored in the memory 540. According to an embodiment of the disclosure, the processor 80 may perform a process of determining a short state of the IPM 40 included in the washing machine 100 by executing the program stored in the memory 540. The professor 80 may perform a process of controlling an on-operation or an off-operation of the relay 20, when the IPM 40 is in a short state, by executing the program stored in the memory 540.

The memory 540 may store necessary data or information according to an embodiment of the disclosure. For example, the memory 540 may include a preset current value, first time information, second time information, first number of times information, and second number of times information. The preset current value, the first time information, the second time information, the first number of times information, and the second number of times information may be set according to specifications of the IPM 40 and the motor 50.

The processor 80 according to an embodiment of the disclosure may be configured to include the memory 540.

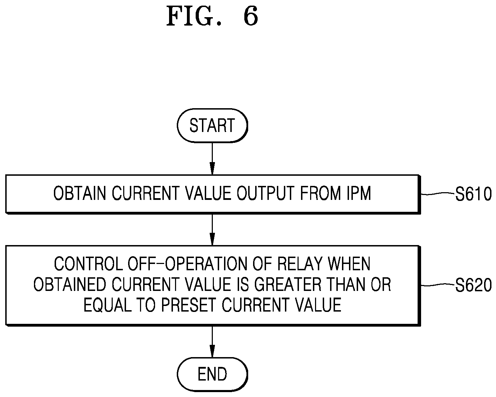

FIG. 6 is a flowchart illustrating a method of controlling a washing machine, according to an embodiment of the disclosure. The method of FIG. 6 may be performed by the processor 80 included in the washing machine 100.

In operation S610 of FIG. 6, when the washing machine 100 is in a standby state, the processor 80 of the washing machine 100 obtains a current value output from the IPM 40. The obtained current value is a current value detected by the sensor 70. The obtained current value may be three current values output through three output lines of the IPM 40.

In operation S620, the processor 80 of the washing machine 100 compares the obtained current value with a preset current value. The processor 80 may read and use the preset current value stored in the memory 540. For example, the preset current value may be, but is not limited to, 3.5 A.

In operation S620, when the obtained current value is greater than or equal to the preset current value as a comparison result, the processor 80 may determine that a short current path is formed between the IPM 40 and the motor 50. The processor 80 of the washing machine 100 may perform a comparison process at a first time interval (e.g., 10 ms) for a first number of times (e.g., 10 times). When it is determined that at least one of three current values obtained by the comparison process performed at the first time interval for the first number of times is greater than or equal to the preset current value, the processor 80 controls an off-operation of the relay 20. Accordingly, power supplied to the IPM 40 is cut off to block the short current path formed between the IPM 40 and the motor 50. As the short current path formed between the IPM 40 and the motor 50 is blocked, carbonization of the motor 50 may be prevented.

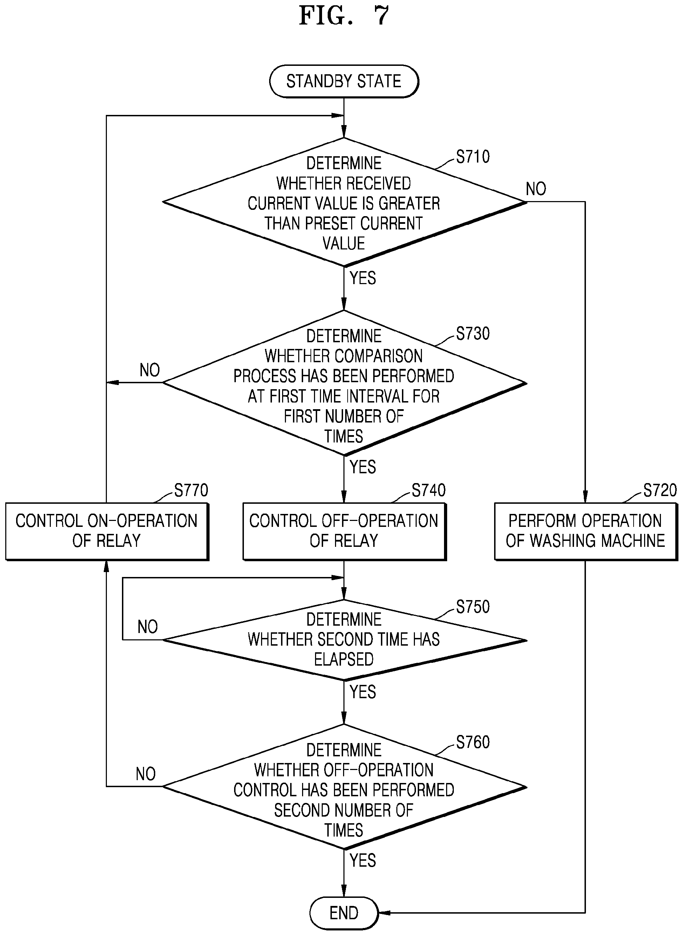

To more clearly determine a short state of the IPM 40, the processor 80 may perform the comparison process and the off-operation control process of the relay 20 at least twice. When it is determined that the current value output from the IPM 40 is greater than or equal to the preset current value even after performing the comparison process and the off-operation control process of the relay 20 twice, the processor 80 maintains an off-operation control state of the relay 20. In operation S620, the processor 80 may perform the comparison process and the off-operation control process of the relay 20 as shown in FIG. 7 described below.

FIG. 7 is a detailed flow chart illustrating an off-operation control process of the relay 20, according to an embodiment of the disclosure. The method of FIG. 7 may be performed by the processor 80 of the washing machine 100.

Referring to FIG. 7, when an operation state of the washing machine 100 is a standby state, in operation S710, the processor 80 determines whether at least one of obtained three current values is greater than or equal to a preset reference current value (3.5 A). The present reference current value may be set according to specifications of the IPM 40 and the motor 50. The obtained three current values are three current values output from the IPM 40.

In operation S710, when all of the obtained current values are not greater than or equal to the preset current value, the processor 80 determines that a state of the IPM 40 is a normal state. Accordingly, in operation S720, the processor 80 performs an operation of the washing machine 100. The operation of the washing machine 100 in operation S720 may be an operation before the standby state. For example, the operation of the washing machine 100 may include at least one of a washing cycle, a rinsing cycle, or a spinning cycle. The operation of the washing machine 100 may further include a drying cycle.

In operation S710, when at least one of the obtained three current values is greater than or equal to the preset current value, in operation S730, the processor 80 determines whether a comparison process in operation S710 has been performed at a first time interval (e.g., 10 ms) for a first number of times (e.g., 10 times). The first time and the first number of times may be determined based on specifications of the IPM 40 and the motor 50.

In operation S730, when it is determined that the comparison process in operation S710 has been performed at the first time interval (e.g., 10 ms) for the first number of times (e.g., 10 times), in operation S740, the processor 80 controls an off-operation of the relay 20. Accordingly, the relay 20 is turned off, and power supplied to the IPM 40 is cut off.

In operation S750, the processor 80 determines whether a second time (e.g., 10 seconds) has elapsed after the off-operation of the relay 20 is controlled. In operation S750, when it is determined that the second time has elapsed, in operation S760, the processor 80 determines whether off-operation control of the relay 20 has been performed a second number of times (e.g., 3 times).

In operation S760, when the off-operation control of the relay 20 has not been performed the second number of times (e.g., 3 times), in operation S770, the processor 80 controls an on-operation of the relay 20. Accordingly, the relay 20 is turned on to supply power to the IPM 40. After the relay 20 is turned on, the processor 80 returns to operation S710 and performs an operation of comparing the obtained current value with the preset current value.

In operation S760, when it is determined that the off-operation control of the relay 20 has been performed the second number of times (e.g., 3 times), the processor 80 ends the off-operation control of the relay 20. Accordingly, the off-state of the relay 20 is maintained to cut off power supplied to the IPM 40. As power supplied to the IPM 40 is cut off, a short current path formed between the IPM 40 and the motor 50 due to a short state of the IPM 40 may be blocked, thereby preventing carbonization of the motor 50. As such, according to an embodiment of the disclosure, as output current of the IPM 40 is monitored while controlling the off-operation of the relay 20 multiple times, an error state of the IPM 40 may be more accurately determined.

The preset current value, the first time (e.g., 10 ms), the first number of times (e.g., 10 times), the second time (e.g., 10 seconds), and the second number of times (e.g., 3 times) described with reference to FIG. 7 may be determined according to the specifications of the IPM 40 and the motor 50.

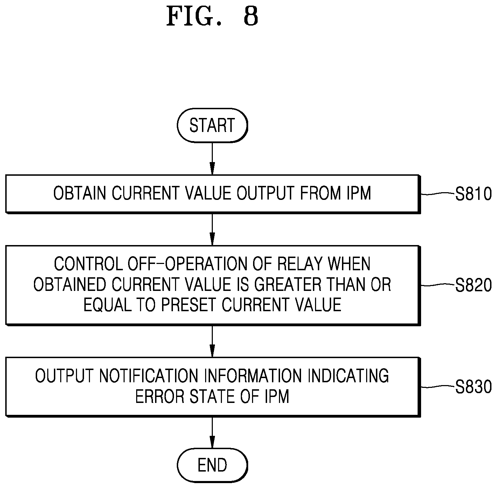

FIG. 8 is a flowchart illustrating a method of controlling a washing machine, according to an embodiment of the disclosure. The method of FIG. 8 may be performed by the processor 80 included in the washing machine 100.

In operation S810 of FIG. 8, when the washing machine 100 is in a standby state, the processor 80 of the washing machine 100 obtains a current value output from the IPM 40. The obtained current value is a current value detected by the sensor 70. The obtained current value may be three current values output through three output lines of the IPM 40.

In operation S820, the processor 80 of the washing machine 100 compares the obtained current value with a preset current value. The processor 80 may read and use the preset current value stored in the memory 540. For example, the preset current value may be, but is not limited to, 3.5 A.

In operation S820, when the obtained current value is greater than or equal to the preset value as a comparison result, the processor 80 of the washing machine 100 may determine that a short current path is formed between the IPM 40 and the motor 50. The processor 80 of the washing machine 100 may perform a comparison process at a first time interval (e.g., 10 ms) for a first number of times (e.g., 10 times). When it is determined that at least one of three current values obtained by the comparison process performed at the first time interval for the first number of times is greater than or equal to the preset current value, the processor 80 controls an off-operation of the relay 20. Accordingly, power applied to the IPM 40 is cut off to block the short current path formed between the IPM 40 and the motor 50. As the short current path formed between the IPM 40 and the motor 50 is blocked, carbonization of the motor 50 may be prevented.

To more accurately determine a short state of the IPM 40, the processor 80 may perform the comparison process and the off-operation control process of the relay 20 at least twice. When it is determined that the current value output from the IPM 40 is greater than or equal to the preset current value even after performing the comparison process and the off-operation control process of the relay 20 twice, the processor 80 maintains an off-operation control state of the relay 20. In operation S820, the processor 80 may perform the comparison process and the off-operation control process of the relay 20 as shown in FIG. 7.

In operation S830, the processor 80 may output notification information indicating an error state of the IPM 40. The notification information may be output as a message. The notification information may be output as a voice guide. The notification information may be output as an error code. The notification information may be output as an image indicating an error location. A type of the notification information is not limited thereto. The processor 80 may output the notification information through at least one of a display and a speaker included in the output unit 512. The processor 80 may transmit the notification information to the external device 900 connected through the communication unit 550.

FIG. 9 is a diagram illustrating a relationship between the washing machine 100 and the external device 900, according to an embodiment of the disclosure.

Referring to FIG. 9, the washing machine 100 transmits notification information 910 indicating occurrence of an error of the IPM 40 to the external device 900 by using a wireless communication method. The external device 900 may be a portable terminal. The external device 900 may be a home server. The external device 900 may transmit a remote control signal for controlling an operation state of the washing machine 100 to the washing machine 100. The external device 900 and the washing machine 100 may transmit and receive data by using a wired communication method. The external device 900 and the washing machine 100 may transmit and receive data by using a short-range communication method.

The washing machine 100 including the washing tub 60 according to an embodiment of the disclosure may include the motor 50 configured to supply rotational power to the washing tub 60, the intelligent power module (IPM) 40 configured to supply driving power of the motor 50, the sensor 70 configured to detect a current value output from the IPM 40, the relay 20 configured to output the AC power 10 applied to the washing machine 100, the rectifier 30 configured to rectify the AC power output from the relay 20 into DC power and output the DC power to the IPM 40, and the at least one processor 80.

When the washing machine 100 is in a standby state, the at least one processor 80 according to an embodiment of the disclosure may be configured to obtain a current value detected by the sensor 70, and when the obtained current value is greater than or equal to a preset current value, control an off-operation of the relay 20 to cut off power supplied to the IPM 40.

The at least one processor 80 according to an embodiment of the disclosure may be configured to compare the obtained current value obtained with the preset current value at a first time interval, and when a number of times it is determined that the obtained current value is greater than or equal to the preset current value is a first number of times, control an off-operation of the relay 20.

The at least one processor 80 according to an embodiment of the disclosure may be configured to, when a second time elapses after the off-operation of the relay 20 is controlled, control an on-operation of the relay 20, and after the on-operation of the relay 20 is controlled, compare the obtained current value with the preset current value.

The at least one processor 80 according to an embodiment of the disclosure may be configured to, as the second time elapses after the off-operation of the relay 20 is controlled, when an operation of controlling the on-operation of the relay 20 is performed a second number of times, maintain an off-operation control state of the relay 210.

The washing machine 100 according to an embodiment of the disclosure may further include the output unit 512 including at least one of a display configured to display information and a speaker configured to output the information as an audio signal, and the at least one processor 80 may be configured to, after the off-operation of the relay 20 is controlled, output notification information indicating occurrence of an error of the IPM 40 through at least one of the display and the speaker included in the output unit 512.

The washing machine 100 according to an embodiment of the disclosure may further include the communication unit 550 configured to communicate with at least one external device 900, and the at least one processor 80 may be configured to, after the off-operation of the relay 20 is controlled, transmit notification information indicating occurrence of an error of the IPM 40 to the external device 900 through the communication unit 550.

The first time, the second time, the first number of times, and the second number of times according to an embodiment of the disclosure may be set according to specifications of the IPM 40 and the motor 50.

The washing machine 100 according to an embodiment of the disclosure may further include the memory 540 in which at least one instruction is stored, and the at least one processor 80 may be configured to, by executing the instruction, in the standby state of the washing machine 100, control the off-operation of the relay 20 to cut off power supplied to the IPM 40 based on the current value detected by the sensor 70.

The washing machine 100 according to an embodiment of the disclosure may further include the inrush current blocking unit 43 connected in parallel to the relay 20 and configured to cut off inrush current applied from the AC power.

A method of controlling the washing machine 100 including the relay 20 configured to output the AC power 10, the rectifier 30 configured to rectify the AC power output from the relay 20 into DC power, the washing tub 60, the motor 50 configured to supply rotational power to the washing tub 60, the IPM 40 configured to supply driving power of the motor 50 based on the DC power output from the rectifier 30, and the at least one processor 80 according to an embodiment of the disclosure may include: a step (S610, S810) of, in a standby state of the washing machine 100, obtaining a current value output from the IPM 40, by the at least one processor 80; and a step (S620, S820) of, when the obtained current value is greater than or equal to a preset current value, controlling an off-operation of the relay 20 to cut off power supplied to the IPM 40, by the at least one processor 80.

The step (S620, S820) of controlling the off-operation of the relay 20 according to an embodiment of the disclosure may include: a step (S710) of comparing the obtained current value with the preset current value at a first time interval; and a step (S730, S740) of, when a number of times it is determined that the obtained current value is greater than or equal to the preset current value is a first number of times, controlling the off-operation of the relay 20.

The step (S620, S820) of controlling the off-operation of the relay 20 according to an embodiment of the disclosure may include: a step (S750, S770) of, when a second time elapses after the off-operation of the relay 20 is controlled, controlling an on-operation of the relay 20; and a step (S770, S710) of, after the on-operation of the relay 20 is controlled, comparing the obtained current value with the preset current value.

The step (S620, S820) of controlling the off-operation of the relay 20 according to an embodiment of the disclosure may include a step of, as the second time elapses after the off-operation of the relay 20 is controlled, when an operation of controlling the on-operation of the relay 20 is performed a second number of times (S750, S760), maintaining an off-operation control state of the relay 20.

The method of controlling the washing machine 100 according to an embodiment of the disclosure may further include a step of, after the off-operation of the relay 20 is controlled, outputting notification information indicating occurrence of an error of the IPM 40 through at least one of a display and a speaker included in the output unit 512 of the washing machine 100.

The method of controlling the washing machine 100 according to an embodiment of the disclosure may further include a step of, after the off-operation of the relay 20 is controlled, transmitting notification information indicating occurrence of an error of the IPM 40 to the external device 900 connected through the communication unit 550 of the washing machine 100.

A machine-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment, methods according to various embodiments of the disclosure may be provided in a computer program product. The computer program product may be a product purchasable between a seller and a purchaser. The computer program product may be distributed in the form of a machine-readable storage medium (e.g., a compact disc read-only memory (CD-ROM)), or distributed (e.g., downloaded or uploaded) online via an application store or between two user devices (e.g., smartphones) directly. When distributed online, at least part of the computer program product (e.g., a downloadable application) may be temporarily generated or at least temporarily stored in a machine-readable storage medium, such as a memory of a server of a manufacturer, a server of an application store, or a relay server.

## Claims

1. A washing machine (100) comprising a washing tub (60), the washing machine (100) comprising:
a motor (50) configured to supply rotational power to the washing tub (60);
an intelligent power module (IPM) (40) configured to supply driving power of the motor (50);
a sensor (70) configured to detect a current value output from the IPM (40);
a relay (20) configured to output alternating current (AC) power (10) applied to the washing machine (100);
a rectifier (30) configured to rectify the AC power output from the relay (20) into direct current (DC) power and output the DC power to the IPM (40); and
at least one processor (80) configured to,
when the washing machine (100) is in a standby state, obtain a current value detected by the sensor (70), and
when the obtained current value is greater than or equal to a preset current value, control an off-operation of the relay (20) to cut off power supplied to the IPM (40).

2. The washing machine of claim 1, wherein the at least one processor (80) is further configured to
compare the obtained current value with the preset current value at a first time interval, and
when a number of times it is determined that the obtained current value is greater than or equal to the preset current value is a first number of times, control an off-operation of the relay (20).

3. The washing machine of claim 1 or 2, wherein the at least one processor (80) is further configured to,
when a second time elapses after the off-operation of the relay (20) is controlled, control an on-operation of the relay (20), and
after the on-operation of the relay (20) is controlled, compare the obtained current value with the preset current value.

4. The washing machine of claim 3, wherein the at least one processor (80) is further configured to, as the second time elapses after the off-operation of the relay (20) is controlled, when an operation of controlling the on-operation of the relay (20) is performed a second number of times, maintain an off-operation control state of the relay (20).

5. The washing machine (100) of any one of claims 1 to 4, further comprising an output unit (512) comprising a display configured to display information and a speaker configured to output the information as an audio signal,
wherein the at least one processor (80) is further configured to, after the off-operation of the relay (20) is controlled, output notification information indicating occurrence of an error in the IPM (40) through at least one of the display and the speaker included in the output unit (512).

6. The washing machine (100) of any one of claims 1 to 4, further comprising a communication unit (550) configured to communicate with at least one external device (900),
wherein the at least one processor (80) is further configured to, after the off-operation of the relay (20) is controlled, transmit notification information indicating occurrence of an error of the IPM (40) to the at least one external device (900) through the communication unit (550).

7. The washing machine of any one of claims 4 to 6, wherein the first time, the second time, the first number of times, and the second number of times are set according to specifications of the IPM (40) and the motor (50).

8. The washing machine (100) of any one of claims 1 to 7, further comprising
a memory (540) storing at least one instruction,
wherein the at least one processor (80) is further configured to, by executing the at least one instruction, in the standby state of the washing machine (100), control the off-operation of the relay (20) to cut off power supplied to the IPM (40) based on the current value detected by the sensor (70).

9. The washing machine (100) of any one of claims 1 to 8, further comprising an inrush current blocking unit (43) connected in parallel to the relay (20) and configured to cut off inrush current applied from the AC power.

10. A method of controlling a washing machine (100) comprising a relay (20) configured to output alternating current (AC) power (10), a rectifier (30) configured to rectify the AC power output from the relay (20) into direct current (DC) power, a washing tub (60), a motor (50) configured to supply rotational power to the washing tub (60), an intelligent power module (IPM) (40) configured to supply driving power of the motor (50) based on the DC power output from the rectifier (30), and at least one processor (80), the method comprising:
a step (S610, S810) of, in a standby state of the washing machine (100), obtaining a current value output from the IPM (40), by the at least one processor (80); and
a step (S620, S820) of, when the obtained current value is greater than or equal to a preset current value, controlling an off-operation of the relay (20) to cut off power supplied to the IPM (40), by the at least one processor (80).

11. The method of claim 10, wherein the step (S620, S820) of controlling the off-operation of the relay (20) comprises:
a step (S710) of comparing the obtained current value with the preset current value at a first time interval; and
a step (S730, S740) of, when a number of times it is determined that the obtained current value is greater than or equal to the preset current value is a first number of times, controlling the off-operation of the relay (20).

12. The method of claim 10 or 11, wherein the step (S620, S820) of controlling the off-operation of the relay (20) comprises:
a step (S740, S750) of, when a second time elapses after the off-operation of the relay (20) is controlled, controlling an on-operation of the relay (20); and
a step (S770, S710) of, after the on-operation of the relay (20) is controlled, comparing the obtained current value with the preset current value.

13. The method of claim 12, wherein the step (S620, S820) of controlling the off-operation of the relay (20) comprises a step of, as the second time elapses after the off-operation of the relay (20) is controlled, when an operation of controlling the on-operation of the relay (20) is performed a second number of times (S760), maintaining an off-operation control state of the relay (20).

14. The method of any one of claims 10 to 13, further comprising a step (S830) of, after the off-operation of the relay (20) is controlled, outputting notification information indicating occurrence of an error of the IPM (40) through at least one of a display and a speaker included in an output unit (512) of the washing machine (100).

15. The method of any one of claims 10 to 13, further comprising a step of, after the off-operation of the relay (20) is controlled, transmitting notification information indicating occurrence of an error of the IPM (40) to an external device (900) connected through a communication unit (550) of the washing machine (100).
